# EUROPEAN PATENT APPLICATION

(11) **EP 4 811 701 A1**
(43) Date of publication of application: **23.09.2026**
(21) Application number: 24891779.1
(22) Date of filing: 14.11.2024
(51) Int. Cl.: H04L 5/00, H04W 72/0453, H04W 84/12, H04L 27/26

(54) **METHOD AND APPARATUS FOR PPDU-BASED TRANSMISSION OR RECEPTION IN WIRELESS LAN SYSTEM**

(30) Priority: 15.11.2023 US 202363599532 P; 20.11.2023 KR 20230161120; 29.11.2023 KR 20230169597; 04.04.2024 KR 20240046209
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Mooser, Sebastian Thomas
(86) International application number: PCT/KR2024/017979
(87) International publication number: WO 2025/105833

(57) **Abstract**

A method and an apparatus for PPDU-based transmission or reception in a wireless LAN system are disclosed. The method performed by a first station (STA) in a wireless LAN system, according to one embodiment of the present disclosure, may comprise the steps of: receiving, from a second STA, a trigger frame including resource allocation information for transmission of a TB PPDU for a bandwidth greater than or equal to 80 MHz; and transmitting the TB PPDU to the second STA in a DRU or an RU on the basis of the resource allocation information. Here, DRU-based transmission or RU-based transmission can be applied to the TB PPDU on the basis of an 80 MHz channel unit. At this time, the first STA can be allocated, on the basis of a first STA being allocated to a specific 80 MHz channel to which the DRU-based transmission is applied, to at least one from among a first type DRU in which tones are distributed over an 80 MHz channel, a second type DRU in which tones are distributed over a 40 MHz channel, and a third type DRU in which tones are distributed over a 20 MHz channel.

## Description

### [TECHNICAL FIELD]

The present disclosure relates to a method and device for transmitting and receiving a PPDU based on application of distributed resource units and/or general resource units in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and device for transmitting and receiving a PPDU based on application of distributed resource units and/or general resource units in a wireless local area network (WLAN) system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may comprise: receiving, from a second STA, a trigger frame including resource allocation information for transmission of a trigger based (TB) physical layer protocol data unit (PPDU) for a bandwidth greater than or equal to 80 MHz; and transmitting, to the second STA, the TB PPDU in a distributed resource unit (DRU) or a resource unit (RU) based on the resource allocation information. Herein, for the TB PPDU, DRU-based transmission or RU-based transmission may be applied on an 80 MHz channel unit basis. In this case, based on the first STA being allocated within a specific 80 MHz channel to which the DRU-based transmission is applied, the first STA may be allocated to at least one of a first type DRU having tones distributed over an 80 MHz channel, a second type DRU having tones distributed over a 40 MHz channel, or a third type DRU having tones distributed over a 20 MHz channel.

A method performed by a second station (STA) in a wireless local area network (WLAN) system according to an additional aspect of the present disclosure may comprise: transmitting, to a first STA, a trigger frame including resource allocation information for transmission of a trigger based (TB) physical layer protocol data unit (PPDU) for a bandwidth greater than or equal to 80 MHz; and receiving, from the first STA, the TB PPDU in a distributed resource unit (DRU) or a resource unit (RU) based on the resource allocation information. Herein, for the TB PPDU, DRU-based transmission or RU-based transmission may be applied on an 80 MHz channel unit basis. In this case, based on the first STA being allocated within a specific 80 MHz channel to which the DRU-based transmission is applied, the first STA may be allocated to at least one of a first type DRU having tones distributed over an 80 MHz channel, a second type DRU having tones distributed over a 40 MHz channel, or a third type DRU having tones distributed over a 20 MHz channel.

### [Technical Effects]

According to the present disclosure, a method and device for transmitting and receiving a PPDU based on application of distributed resource units and/or general resource units in a wireless local area network (WLAN) system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for describing examples of resource units of a WLAN system to which the present disclosure may be applied.
FIG. 11 is a diagram for describing examples of a DRU to which the present disclosure may be applied.
FIG. 12 illustrates the operation of a first STA for a PPDU transmission and reception method according to an embodiment of the present disclosure.
FIG. 13 illustrates the operation of a second STA for a PPDU transmission and reception method according to an embodiment of the present disclosure.

### [Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

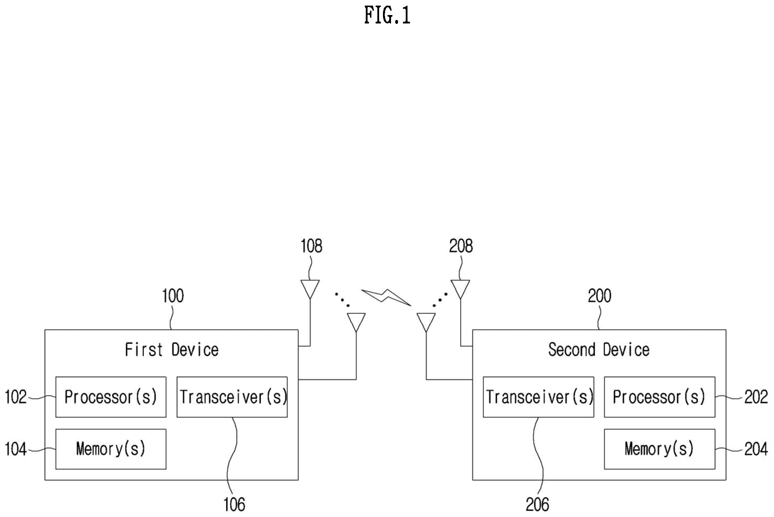

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

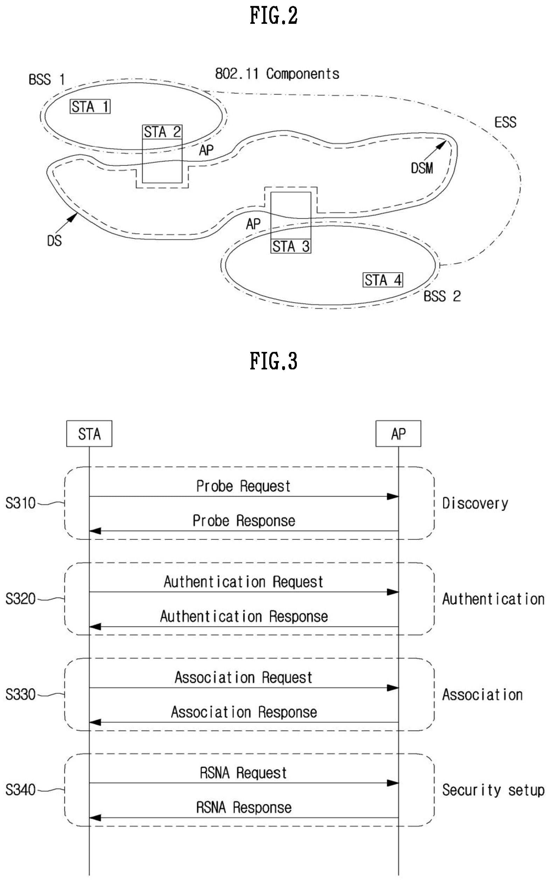

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

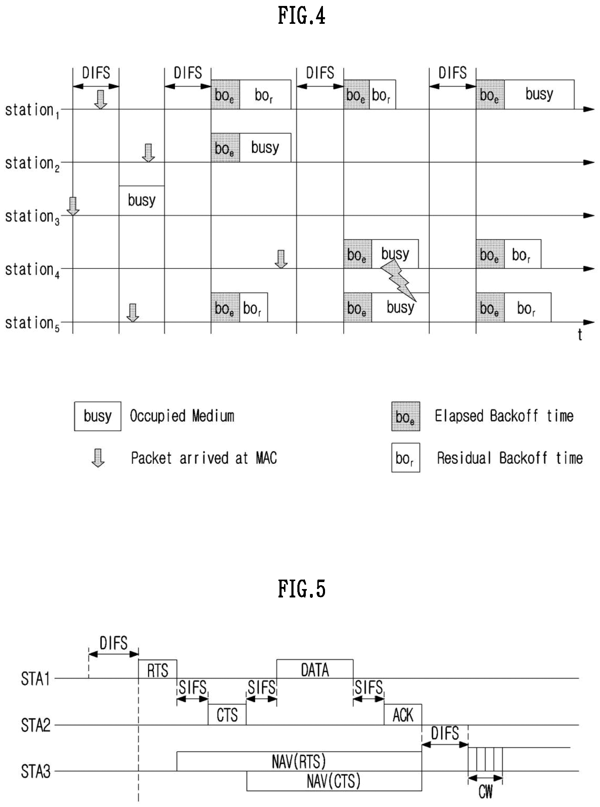

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

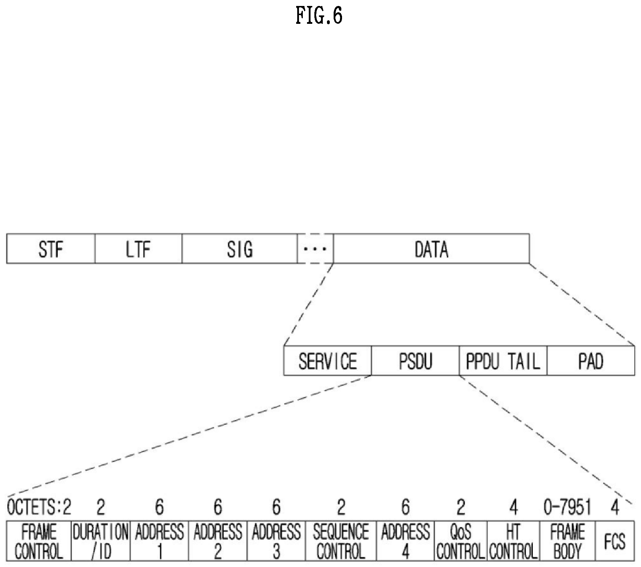

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

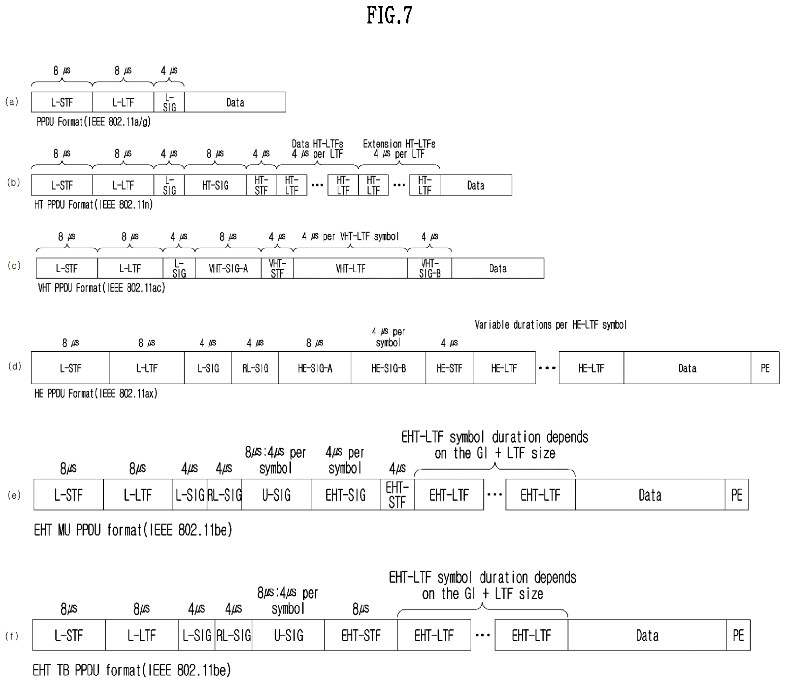

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource Unit

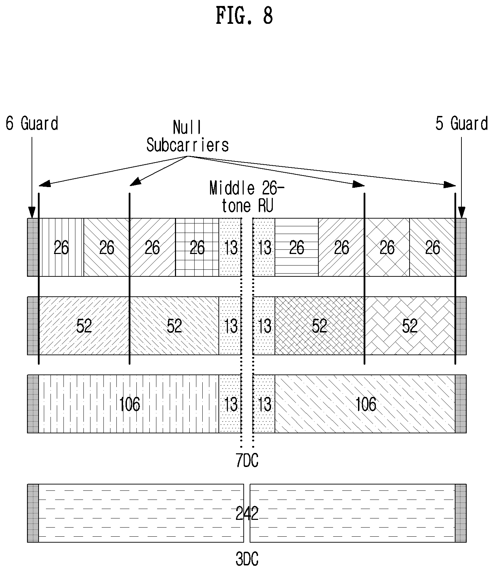

FIGS. 8 to 10 are diagrams for describing examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

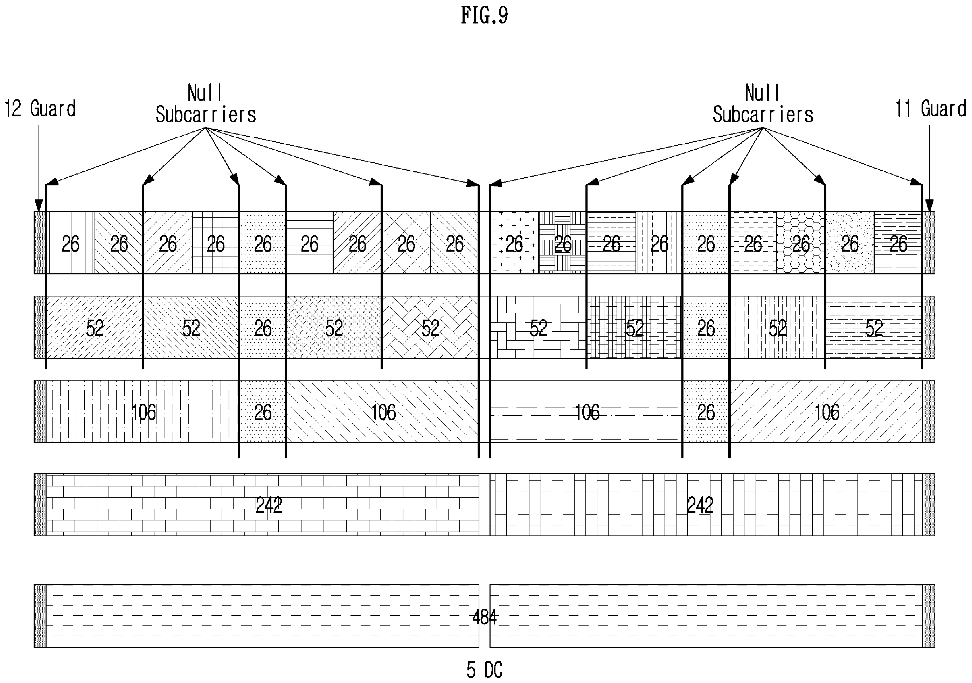

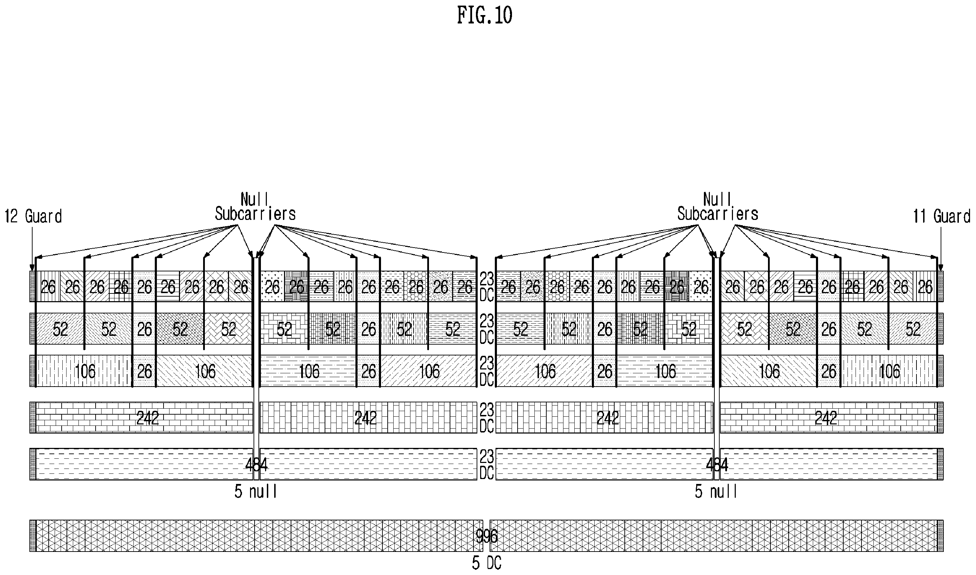

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8.

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. In other words, a transmitting STA (e.g., an AP) may transmit a X-STF (e.g., X is HE, EHT, etc.), a X-LTF and a data field for the first STA through the first RU within one MU PPDU, and may transmit a X-STF, a X-LTF and a data field for the second STA through the second RU. Information about the arrangement of a RU may be signaled through the X-SIG (e.g., X is HE, EHT, U) field of a X-PPDU format.

### Distributed Resource Unit

The limitations on power spectral density (PSD) may be applied in a sub-7GHz (e.g., 6GHz) band due to regulations in various regions. For a non-AP STA in a low power indoor (LPI) band, a PSD limitation may be -1dBm/MHz. For example, for the existing 52-tone RU, the maximum transmission (Tx) power may be approximately 6dBm.

In addition, different limitations may be applied in a 2.4GHz band and a 5GHz band. For example, in EU/China/Japan/Korea, a PSD limitation of 10dBm/MHz may be applied in a 2.4GHz band. For the existing 52-tone RU, the maximum Tx power may be approximately 17dBm. If a PSD limitation may be avoided in a 5GHz band, transmission power may be increased. For example, the maximum transmission power is 24dBm for the existing 52-tone RU, which is still lower by 6dBm than the maximum allowable effective isotropic radiated power (EIRP) of 30dBm.

When a PSD limitation is overcome, transmission power may be increased, thereby enhancing spectrum efficiency or extending a range.

Considering that a PSD limitation is defined per MHz for each STA, when the tones of a small RU are distributed on a wide bandwidth, tones for each STA are non-contiguous, so each tone may be transmitted with high power. A RU including tones distributed in this way is referred to as a distributed RU (DRU), and in order to distinguish from it, a RU including contiguous tones defined in an existing WLAN system (e.g., a system according to IEEE 802.11ax, 11be, etc.) may be referred to as a regular RU (RRU).

Compared to a STA transmitting an existing RRU, a STA transmitting a DRU may use high power. For example, a 52-tone DRU across 80MHz has only one tone per MHz, while for a 52-tone RRU, there are approximately 13 tones per MHz. When a PSD limitation of -1dBm/MHz is assumed in a 6GHz LPI band, for a 52-tone RU, transmission power may be increased by approximately 11dB when a DRU is used. When transmission power is increased in this way, higher MCS may be applied and a longer range may be supported.

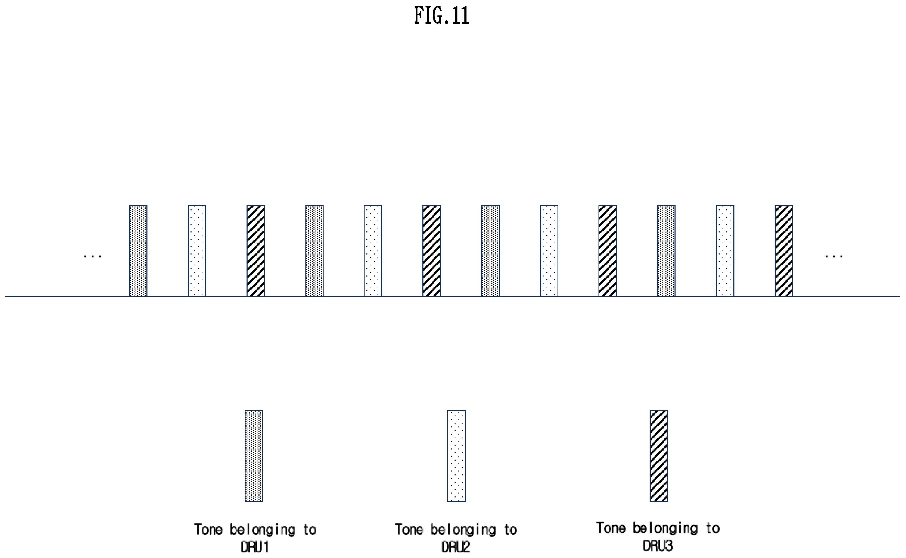

FIG. 11 is a diagram for describing examples of a DRU to which the present disclosure may be applied.

The example of FIG. 11 illustratively shows that STA1 performs transmission on DRU1, STA2 performs transmission on DRU2 and STA3 performs transmission on DRU3. Each STA may apply a transmission power boost by using a DRU. Compared to when a RRU in the same size is used, higher transmission power is applied to all tones in a DRU, and accordingly, spectral efficiency may be greatly improved. In this way, a DRU may be usefully applied particularly in UL-OFDMA.

In case of an AP, a DRU may also be utilized. In some cases, an AP may perform DL-OFDMA transmission to STA(s) by using only some of DRU1, DRU2 and DRU3, and in this case, a transmission power boost due to the use of a DRU may be applied.

In order to maximize a power boost, tones within one DRU may be distributed as far as possible. For example, a DRU including one tone per MHz may be considered an optimal example. The size of a DRU (or the number of available tones (i.e., the number of the remaining tones excluding unavailable tones such as a null tone, a guard tone, a DC tone, etc.) included in one DRU) may be defined to be the same as the size of a RRU (or the number of available tones included in one RRU). Accordingly, effects on various technologies defined previously based on a RRU may be minimized. A table below shows an example of an achievable power boost (in the unit of dB) for various DRUs distributed on a different bandwidth. The examples in a table below assume a 6GHz LPI band, and a power boost may also be obtained in a 2.4GHz band and a 5GHz band in other regions. For example, in 80MHz UL-OFDMA transmission by 8 users, when each user uses a 106-tone DRU, the overall performance may be enhanced by approximately 8.13dB compared to when each user uses a 106-tone RRU. In this way, a DRU may be used to overcome PSD limitations and obtain significant benefits.

**[Table 1]**

| | 20MHz Bandwidth | 40MHz Bandwidth | 80MHz Bandwidth |
|---|---|---|---|
| 26-tone RU | 8.13 | 11.14 | 11.14 |
| 52-tone RU | 6.37 | 8.13 | 11.14 |
| 106-tone RU | 3.36 | 6.37 | 8.13 |
| 242-tone RU | Not Applicable | 2.69 | 5.12 |
| 484-tone RU | Not Applicable | Not Applicable | 2.69 |

### PPDU Transmission and Reception Method to which DRU and/or RRU is applied

As described above, in order to overcome a PSD limitation and improve a power gain, a DRU using distributed tones/subcarriers, rather than an RRU using contiguous tones/subcarriers (or which may be referred to as an RU in consideration of distinction from a DRU), may be applied.

The present disclosure proposes a specific method for defining a structure and configuration of a PPDU in a hybrid mode in which a DRU and an RRU are simultaneously allocated and transmitted. For example, in a PPDU transmission and reception situation with a bandwidth of 40 MHz/80 MHz/160 MHz/320 MHz or greater, a hybrid mode PPDU may be transmitted and received in which transmission is performed by applying a DRU to a specific channel and transmission is performed by applying an RRU, which is an RU of a conventional scheme, to another specific channel. In particular, in applying a DRU to a specific channel, a scheme/structure for applying the corresponding DRU will be described in detail.

In addition, in the present disclosure, in a PPDU transmission situation having a bandwidth greater than or equal to 80 MHz, when a DRU is applied to a specific channel (e.g., a specific 80 MHz channel, a specific 40 MHz channel) within the corresponding PPDU, a specific method for operating the corresponding channel in consideration of a distribution bandwidth (dBW) is proposed.

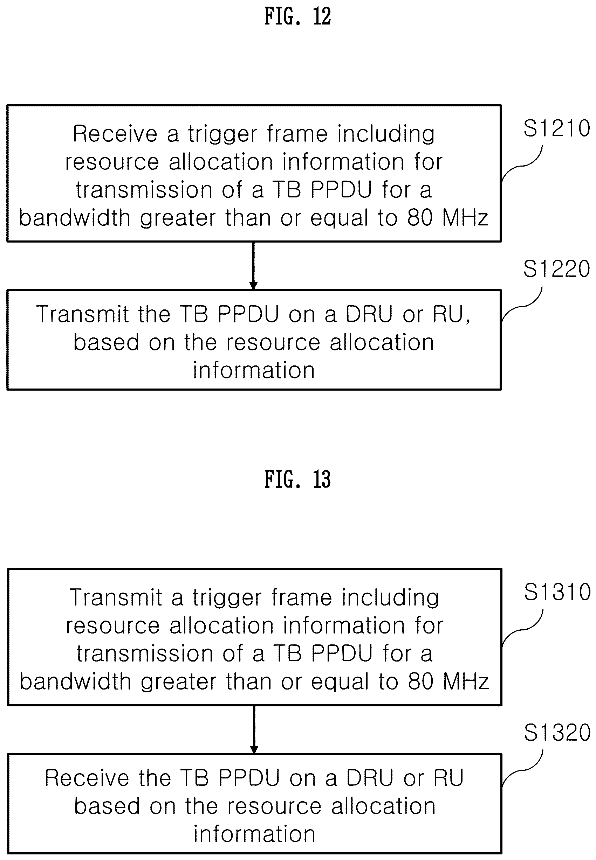

FIGS. 12 and 13 illustrate a PPDU transmission and reception method according to the present disclosure.

For example, in transmission and reception of a TB PPDU based on a trigger frame, a transmitting device may be a non-AP STA, and a receiving device may be an AP. Hereinafter, for convenience of description, the transmitting device may be referred to as a first STA, and the receiving device may be referred to as a second STA.

In the present disclosure, for clarity of description, transmission and reception of a TB PPDU are described as a representative example; however, the present disclosure is not limited thereto, and the proposed method of the present disclosure may be extended and applied to other PPDU types.

FIG. 12 illustrates an operation of a first STA for a PPDU transmission and reception method according to an embodiment of the present disclosure.

FIG. 12 illustrates an operation of a transmitting device based on proposed methods described below. The example of FIG. 12 is for convenience of description and does not limit the scope of the present disclosure. Some step(s) illustrated in FIG. 12 may be omitted according to a situation and/or configuration.

Referring to FIG. 12, the first STA receives, from the second STA, a trigger frame including resource allocation information for transmission of a TB PPDU for a bandwidth greater than or equal to 80 MHz (S1210).

The first STA may construct a PPDU, that is, a TB PPDU, based on the received trigger frame.

The corresponding TB PPDU may be a PPDU to which one of a DRU or an RRU is allocated, or may be a PPDU in a hybrid mode in which a DRU and/or an RU may be simultaneously allocated. For example, the corresponding TB PPDU may be configured to have a bandwidth including one or more channels to which a DRU tone plan or an RU tone plan may be applied.

In this regard, for the corresponding TB PPDU, DRU-based transmission or RU-based transmission may be applied on the basis of an 80 MHz channel unit. Here, the DRU-based transmission corresponds to transmission using a DRU composed of non-contiguous tones, and the RU-based transmission may correspond to transmission using an RU composed of contiguous tones.

Here, the PPDU may be configured to include a legacy portion, a SIG portion (e.g., U-SIG, UHR-SIG, etc.), an STF portion (e.g., UHR-STF), an LTF portion (e.g., UHR-LTF), and a data portion.

All or part of each portion (i.e., field) may be divided into a plurality of sub-portions/subfields. Each field (and its subfield) may be transmitted in units of 4 µs × N (where N is an integer). In addition, a guard interval (GI) may be included. A common subcarrier frequency spacing value (delta_f = 312.5 kHz / N or 312.5 kHz × N, N = integer) may be applied to all of the fields, or a first delta_f may be applied to a first portion (e.g., all of a legacy portion, all or part of a SIG portion), and a second delta_f (e.g., a value smaller than the first delta_f) may be applied to all or part of the remaining portion.

Some of the above-described fields may be omitted, and an order of the fields may be changed in various manners. For example, a subfield of a signal part may be arranged before an STF part, and remaining subfield(s) of the SIG part may be arranged after the STF part.

The above-described legacy portion may include at least one of L-STF (Non-HT Short Training Field), L-LTF (Non-HT Long Training Field), and L-SIG (Non-HT Signal Field) according to a conventional scheme.

The above-described SIG portion (e.g., including a U-SIG field, a UHR-SIG field, etc.) may include various pieces of control information for a transmitted PPDU. For example, the SIG portion may include control information for decoding an STF portion, an LTF portion, and data.

The above-described STF portion may include an STF sequence.

The above-described LTF portion may include a training field (i.e., an LTF sequence) for channel estimation.

The above-described data portion may include user data and may include a packet for a higher layer.

The transmitting device (i.e., the first STA) may configure/generate a PPDU based on the obtained control information. The configuring/generating of the PPDU may include configuring/generating each field of the PPDU. That is, the step may include configuring one or more fields including control information related to a tone plan (e.g., a DRU tone plan, an RU tone plan). For example, the step may include configuring a signal field (x-SIG field) including control information related to the tone plan. That is, the step may include configuring a field including control information indicating a size/location of a DRU/RU (e.g., an N-bit bitmap) and/or configuring a field including an identifier (e.g., an AID) of an STA receiving the DRU/RU.

In addition, the step may include generating an STF/LTF sequence transmitted through a specific RU or MRU. The STF/LTF sequence may be generated based on a preset STF generation sequence/LTF generation sequence.

Thereafter, the first STA transmits the TB PPDU to the second STA in a DRU or RU allocated to the first STA, based on the resource allocation information (S1220).

Here, the transmitting device (i.e., the first STA) may perform at least one of cyclic shift diversity (CSD), spatial mapping, inverse discrete Fourier transform (IDFT)/inverse fast Fourier transform (IFFT) operation, and guard interval (GI) insertion for operation S1220.

In this regard, for a PPDU having a bandwidth greater than or equal to 80 MHz, when the first STA is allocated within a specific 80 MHz channel to which the above-described DRU-based transmission is applied, the first STA may be allocated, within the corresponding specific 80 MHz channel, to at least one of: a first type DRU in which tones are distributed over the 80 MHz channel; a second type DRU in which tones are distributed over a 40 MHz channel; or a third type DRU in which tones are distributed over a 20 MHz channel. Here, the first type DRU refers to a type of DRU applicable when tones are distributed over a 80 MHz distributed bandwidth (80 MHz dBW), that is an entire 80 MHz channel; the second type DRU refers to a type of DRU applicable when tones are distributed over a 40 MHz distributed bandwidth (40 MHz dBW), that is an entire 40 MHz channel; and the third type DRU refers to a type of DRU applicable when tones are distributed over a 20 MHz distributed bandwidth (20 MHz dBW), that is an entire 20 MHz channel.

According to an embodiment of the present disclosure, the specific 80 MHz channel may be based on any one of: a first type distributed channel configured such that one first type DRU is applicable; a second type distributed channel configured such that one second type DRU and two third type DRUs are applicable; a third type distributed channel configured such that two second type DRUs are applicable; or a fourth type distributed channel configured such that four third type DRUs are applicable. In this regard, the corresponding specific 80 MHz channel may be a non-punctured 80 MHz channel. In this case, the trigger frame may include information indicating a type/mode of a distributed channel (e.g., the first type distributed channel, the second type distributed channel, the third type distributed channel, and/or the fourth type distributed channel) for the corresponding specific 80 MHz channel.

For example, the first type distributed channel may correspond to an 80 MHz dBW type/mode; the second type distributed channel may correspond to a 20 MHz + 20 MHz + 40 MHz dBW type/mode or a 40 MHz + 20 MHz + 20 MHz dBW type/mode; the third type distributed channel may correspond to a 40 MHz + 40 MHz dBW type/mode; and the fourth type distributed channel may correspond to a 20 MHz + 20 MHz + 20 MHz + 20 MHz dBW type/mode.

According to an embodiment of the present disclosure, when 20 MHz puncturing is applied to a specific 80 MHz channel, the corresponding specific 80 MHz channel may be based on any one of: a fifth type distributed channel configured such that one second type DRU and one third type DRU are applicable; or a sixth type distributed channel configured such that three third type DRUs are applicable. In this case, the trigger frame may include information indicating a type/mode of a distributed channel (e.g., the fifth type distributed channel and/or the sixth type distributed channel) for the corresponding specific 80 MHz channel to which 20 MHz puncturing is applied.

For example, the fifth type distributed channel may correspond to a 20 MHz + 40 MHz dBW type/mode or a 40 MHz + 20 MHz dBW type/mode, and the sixth type distributed channel may correspond to a 20 MHz + 20 MHz + 20 MHz dBW type/mode.

According to an embodiment of the present disclosure, when 40 MHz puncturing is applied to a specific 80 MHz channel, the corresponding specific 80 MHz channel may be based on any one of: a seventh type distributed channel configured such that one second type DRU is applicable; or an eighth type distributed channel configured such that two third type DRUs are applicable. In this case, the trigger frame may include information indicating a type/mode of a distributed channel (e.g., the seventh type distributed channel and/or the eighth type distributed channel) for the corresponding specific 80 MHz channel to which 40 MHz puncturing is applied.

For example, the seventh type distributed channel may correspond to a 40 MHz dBW type/mode, and the eighth type distributed channel may correspond to a 20 MHz + 20 MHz dBW type/mode.

According to an embodiment of the present disclosure, when a bandwidth of a PPDU is 80 MHz, DRU-based transmission or RU-based transmission may be applied on the basis of a 40 MHz channel unit. In this regard, when the above-described DRU-based transmission is allocated to a specific 40 MHz channel belonging to a PPDU having an 80 MHz bandwidth, the corresponding specific 40 MHz channel may be based on any one of: a ninth type distributed channel configured such that one second type DRU is applicable (e.g., 40 MHz dBW); or a tenth type distributed channel configured such that two third type DRUs are applicable (e.g., 20 MHz + 20 MHz dBW). If 20 MHz puncturing is applied to a specific 40 MHz channel, a third type DRU may be applied to a non-punctured 20 MHz channel within the corresponding specific 40 MHz channel. For example, with respect to an 80 MHz bandwidth, when the first STA is allocated within a specific 40 MHz channel to which DRU-based transmission is applied and 20 MHz puncturing is applied to the corresponding specific 40 MHz channel, the first STA may be allocated to a DRU in which tones are distributed over a non-punctured 20 MHz channel within the corresponding specific 40 MHz channel.

The method described in the example of FIG. 12 may be performed by the first device (100) of FIG. 1. For example, one or more processors (102) of the first device (100) of FIG. 1 may be configured to receive a trigger frame including resource allocation information for transmission of a TB PPDU for a bandwidth greater than or equal to 80 MHz, and to transmit, based on the resource allocation information, the TB PPDU to a second STA in a DRU or RU. Further, one or more memories (104) of the first device (100) may store instructions for performing the method described in the example of FIG. 12 or examples described below, when executed by the one or more processors (102).

FIG. 13 illustrates an operation of a second STA for a PPDU transmission and reception method according to an embodiment of the present disclosure.

FIG. 13 illustrates an operation of a receiving device based on proposed methods described below. The example of FIG. 13 is for convenience of description and does not limit the scope of the present disclosure. Some step(s) illustrated in FIG. 13 may be omitted according to a situation and/or configuration.

Referring to FIG. 13, the second STA transmits, to the first STA, a trigger frame including resource allocation information for transmission of a TB PPDU for a bandwidth greater than or equal to 80 MHz (S1310).

Thereafter, the second STA receives, from the first STA, the TB PPDU in a DRU or RU based on the resource allocation information (S1320).

Here, the PPDU may be configured to include a legacy portion, a SIG portion (e.g., U-SIG, UHR-SIG, etc.), an STF portion (e.g., UHR-STF), an LTF portion (e.g., UHR-LTF), and a data portion.

All or part of each portion (i.e., field) may be divided into a plurality of sub-portions/subfields. Each field (and its subfield) may be transmitted in units of 4 µs × N (where N is an integer). In addition, a guard interval (GI) may be included. A common subcarrier frequency spacing value (delta_f = 312.5 kHz / N or 312.5 kHz × N, N = integer) may be applied to all of the fields, or a first delta_f may be applied to a first portion (e.g., all of a legacy portion, all or part of a SIG portion), and a second delta_f (e.g., a value smaller than the first delta_f) may be applied to all or part of the remaining portion.

Some of the above-described fields may be omitted, and an order of the fields may be changed in various manners. For example, a subfield of a signal part may be arranged before an STF part, and remaining subfield(s) of the SIG part may be arranged after the STF part.

The above-described legacy portion may include at least one of L-STF (Non-HT Short Training Field), L-LTF (Non-HT Long Training Field), and L-SIG (Non-HT Signal Field) according to a conventional scheme.

The above-described SIG portion (e.g., including a U-SIG field, a UHR-SIG field, etc.) may include various pieces of control information for a transmitted PPDU. For example, the SIG portion may include control information for decoding an STF portion, an LTF portion, and data.

The above-described STF portion may include an STF sequence.

The above-described LTF portion may include a training field (i.e., an LTF sequence) for channel estimation.

The above-described data portion may include user data and may include a packet for a higher layer.

Here, the receiving device (i.e., the second STA) may receive all or part of the PPDU through step S1320. For operation of step S1320, the receiving device (i.e., the second STA) may perform an operation of restoring results of CSD, spatial mapping, IDFT/IFFT operation, and GI insertion applied by the transmitting device.

Thereafter, the second STA may process the TB PPDU. As an example, the receiving device (i.e., the second STA) may perform decoding on all or part of the TB PPDU.

For example, the receiving device may decode an x-SIG field of the PPDU based on a legacy STF/LTF and may obtain information included in the x-SIG field. For example, information related to a tone plan proposed in the present disclosure may be included in the x-SIG field, and the receiving STA may obtain information related to the tone plan (e.g., a DRU tone plan, an RU tone plan) through the x-SIG field. The information related to the tone plan may be included in the x-SIG, and the receiving STA may obtain the information related to the tone plan through the x-SIG.

The receiving device (i.e., the second STA) may decode a remaining portion of the PPDU based on the obtained information related to the tone plan. For example, the receiving device (i.e., the second STA) may decode an STF/LTF field of the PPDU based on the information related to the tone plan. In addition, the receiving device (i.e., the second STA) may decode a data field of the PPDU based on the information related to the tone plan and may obtain an MPDU included in the data field.

In addition, the receiving device (i.e., the second STA) may perform a processing operation of delivering decoded data to a higher layer (e.g., a MAC layer). In addition, when generation of a signal is instructed from the higher layer to a PHY layer in response to the data delivered to the higher layer, a subsequent operation may be performed.

In this regard, for the above-described TB PPDU, DRU-based transmission or RU-based transmission may be applied on the basis of an 80 MHz channel unit. When the first STA is allocated within a specific 80 MHz channel to which DRU-based transmission is applied, the first STA may be allocated, within the corresponding specific 80 MHz channel, to at least one of: a first type DRU in which tones are distributed over the 80 MHz channel; a second type DRU in which tones are distributed over a 40 MHz channel; or a third type DRU in which tones are distributed over a 20 MHz channel.

Since a structure of an 80 MHz channel or a 40 MHz channel to which a DRU is applied (e.g., a distributed channel applied to the corresponding channel), a structure and application scheme of the first type DRU, the second type DRU, and/or the third type DRU, a DRU application scheme according to whether puncturing (e.g., 20 MHz puncturing, 40 MHz puncturing) is applied, and a hybrid mode PPDU are the same as those described with reference to FIG. 12, redundant description thereof is omitted in the description of FIG. 13.

The method described in the example of FIG. 13 may be performed by the second device (200) of FIG. 1. For example, one or more processors (202) of the second device (200) of FIG. 1 may be configured to transmit, to the first STA, a trigger frame including resource allocation information for transmission of a TB PPDU for a bandwidth greater than or equal to 80 MHz, and to receive, from the first STA, the TB PPDU in a DRU or RU based on the resource allocation information. Further, one or more memories (204) of the second device (200) may store instructions for performing the method described in the example of FIG. 13 or examples described below, when executed by the one or more processors (202).

The examples of FIGS. 12 and 13 may correspond to some of various examples of the present disclosure. Hereinafter, various examples of the present disclosure, including the examples of FIGS. 12 and 13, will be described in more detail.

In the present disclosure, a method for defining a structure and configuration of a PPDU in a hybrid mode in which a DRU and an RRU are simultaneously allocated and transmitted (hereinafter, Embodiments 1 to 4) and a method for operating a corresponding channel in consideration of a distributed bandwidth (dBW) when a DRU is applied in a channel of a specific size within a PPDU (hereinafter, Embodiment 5) will be described in detail.

The embodiments described below are distinguished for clarity of description only, and each embodiment may be independently applied, or may be applied in combination with or in substitution for part of a configuration of another embodiment. For example, the method described in Embodiment 5 may be extended and applied to Embodiments 1 to 4.

### Embodiment 1

The present embodiment relates to a case in which, for advantages such as signaling, only DRU transmission or only RRU transmission is performed/applied within an 80 MHz channel unit in a PPDU transmission situation having a bandwidth of 160 MHz and/or 320 MHz.

That is, within the corresponding 80 MHz channel, a DRU and an RRU may not be simultaneously applied. However, when tones of a DRU are distributed over an entire 160 MHz channel and/or 320 MHz channel (i.e., when a distribution bandwidth (dBW) is 160 MHz and/or 320 MHz), an RRU may not be allocated within the corresponding channel. In addition, when tones of a DRU are distributed over an entire bandwidth, an RRU may not be allocated in the corresponding PPDU, and the corresponding PPDU may not be referred to as a hybrid mode PPDU.

In this case, when a large RU is used, applying a DRU may not provide a greater power boosting gain compared to an RRU. On the other hand, when a small RU is used, applying a DRU may provide a greater power boosting gain compared to an RRU.

Accordingly, in a hybrid mode PPDU transmission situation according to the present embodiment, use of a DRU may be restricted when a small RU is applied, and an RRU may be applicable starting from a 242-tone RU. In this regard, a DRU of 242 tones or more may also be usable, or a DRU may be restricted to a small RU. Alternatively, use of a DRU may be restricted when a 26-tone RU or a 52-tone RU is applied, and an RRU may be usable starting from a 106-tone RU. In this regard, a DRU of 106 tones or more may also be usable, or a DRU may be restricted up to a 52-tone RU. Alternatively, use of a DRU may be restricted when a 26-tone RU is applied, and an RRU may be usable starting from a 52-tone RU. In this regard, a DRU of 52 tones or more may also be usable, or a DRU may be restricted to only a 26-tone RU.

In this case, within an 80 MHz channel to which a DRU is applied, only a DRU in which tones are distributed over the entire 80 MHz channel may be applied, or only a DRU distributed at least over a 40 MHz channel (i.e., an 80 MHz channel and/or a 40 MHz channel) may be applied, or a DRU distributed up to a 20 MHz channel (i.e., an 80 MHz channel, a 40 MHz channel, and/or a 20 MHz channel) may be applied.

Additionally or alternatively, when puncturing is applied to a specific 80 MHz channel to which DRU transmission is applied, a DRU in which tones are distributed over an entire channel (i.e., each 40 MHz channel and each 20 MHz channel) may be applied to a non-punctured 40 MHz channel and a non-punctured 20 MHz channel within the corresponding 80 MHz channel, respectively. This may correspond to a case in which, in the above-described PPDU transmission situation having a bandwidth of 160 MHz and/or 320 MHz, only a DRU in which tones are distributed over the entire 80 MHz channel is applied, or only a DRU distributed at least over a 40 MHz channel (i.e., an 80 MHz channel and/or a 40 MHz channel) is applied. In this regard, for a non-punctured 80 MHz channel, a DRU in which tones are distributed over an entire channel as described above may be applied, or only a DRU distributed at least over a 40 MHz channel or a DRU distributed up to a 20 MHz channel may be considered.

### Embodiment 2

This embodiment relates to a case in which, in a PPDU transmission situation having a bandwidth of 320 MHz, only DRU transmission or RRU transmission is performed/applied within a 160 MHz channel unit.

That is, within the corresponding 160 MHz channel, DRU and RRU may not be applied simultaneously. However, when tones of the DRU are distributed over the entire 320 MHz channel (i.e., when a distributed bandwidth (dBW) is 320 MHz), an RRU may not be allocated within the corresponding channel. In addition, when the tones of the DRU are distributed over the entire bandwidth, an RRU may not be allocated to the corresponding PPDU, and the corresponding PPDU may not be referred to as a PPDU of a hybrid mode.

In a PPDU transmission situation of a hybrid mode according to the present embodiment, application of a small RU may be constrained to use a DRU, and an RRU may be applicable from a 242-tone RU. In this regard, a DRU of 242 tones or more may also be usable, or the DRU may be constrained to a small RU. Alternatively, when a 26-tone RU or a 52-tone RU is applied, use of a DRU may be constrained, and an RRU may be usable from a 106-tone RU. In this regard, a DRU of 106 tones or more may also be usable, or the DRU may be constrained up to a 52-tone RU. Alternatively, when a 26-tone RU is applied, use of a DRU may be constrained, and an RRU may be usable from a 52-tone RU. In this regard, a DRU of 52 tones or more may also be usable, or the DRU may be constrained to only a 26-tone RU.

In this case, within a 160 MHz channel to which a DRU is applied, only a DRU having tones distributed over the entire 160 MHz channel may be applied, or only a DRU distributed at least over an 80 MHz channel (i.e., a 160 MHz channel and/or an 80 MHz channel) may be applied, or only a DRU distributed at least over a 40 MHz channel (i.e., a 160 MHz channel, an 80 MHz channel, and/or a 40 MHz channel) may be applied, or a DRU distributed up to a 20 MHz channel (i.e., a 160 MHz channel, an 80 MHz channel, a 40 MHz channel, and/or a 20 MHz channel) may be applied.

Additionally or alternatively, when puncturing is applied to a specific 160 MHz channel to which DRU transmission is applied, in non-punctured 80 MHz channels, 40 MHz channels, and 20 MHz channels within the corresponding 160 MHz channel, a DRU having tones distributed over an entire channel (i.e., each 80 MHz channel, 40 MHz channel, and 20 MHz channel) may be applied to each thereof. For example, a configuration of the corresponding channel to which 20 MHz puncturing is applied may be 80 MHz + 40 MHz + 20 MHz, and a configuration of the corresponding channel to which 40 MHz puncturing is applied may be 80 MHz + 40 MHz (in this case, a 20 MHz channel is not considered). This may correspond to a case in which, in the above-described PPDU transmission situation having a bandwidth of 320 MHz, only a DRU having tones distributed over an entire 160 MHz is applied, or only a DRU distributed at least over an 80 MHz channel (i.e., a 160 MHz channel and/or an 80 MHz channel) is applied, or only a DRU distributed at least over a 40 MHz channel (i.e., an 80 MHz channel and/or a 40 MHz channel) is applied. In this case, when a DRU distributed at least over a 40 MHz channel is applied, a DRU of a non-punctured 80 MHz channel may correspond to a DRU distributed over an 80 MHz channel or a 40 MHz channel. In this regard, with respect to a DRU of a non-punctured 160 MHz channel, as described above, only a DRU having tones distributed over an entire channel, a DRU distributed at least over an 80 MHz channel, a DRU distributed at least over a 40 MHz channel, or a DRU distributed over a 20 MHz channel may be considered.

### Embodiment 3

This embodiment relates to a case in which, in a PPDU transmission situation having a bandwidth of 80 MHz, 160 MHz, and/or 320 MHz, only DRU transmission or RRU transmission is performed/applied within a 40 MHz channel unit.

That is, within the corresponding 40 MHz channel, DRU and RRU may not be applied simultaneously. However, when tones of the DRU are distributed over an entire 80 MHz channel, 160 MHz channel, and/or 320 MHz channel (i.e., when a distributed bandwidth (dBW) is 80 MHz, 160 MHz, and/or 320 MHz), an RRU may not be allocated within the corresponding channel. In addition, when the tones of the DRU are distributed over the entire bandwidth, an RRU may not be allocated to the corresponding PPDU, and the corresponding PPDU may not be referred to as a PPDU of a hybrid mode.

In a PPDU transmission situation of a hybrid mode according to the present embodiment, application of a small RU may be constrained to use a DRU, and an RRU may be applicable from a 242-tone RU. In this regard, a DRU of 242 tones or more may also be usable, or the DRU may be constrained to a small RU. Alternatively, when a 26-tone RU or a 52-tone RU is applied, use of a DRU may be constrained, and an RRU may be usable from a 106-tone RU. In this regard, a DRU of 106 tones or more may also be usable, or the DRU may be constrained up to a 52-tone RU. Alternatively, when a 26-tone RU is applied, use of a DRU may be constrained, and an RRU may be usable from a 52-tone RU. In this regard, a DRU of 52 tones or more may also be usable, or the DRU may be constrained to only a 26-tone RU.

In this case, within a 40 MHz channel to which a DRU is applied, only a DRU having tones distributed over an entire 40 MHz channel may be applied, or a DRU distributed up to a 20 MHz channel (i.e., a 40 MHz channel and/or a 20 MHz channel) may be applied.

Additionally or alternatively, when puncturing is applied to a specific 80 MHz channel, a DRU or an RRU may be applied to each of non-punctured 40 MHz channels and 20 MHz channels within the corresponding 80 MHz channel. That is, in such a case, as an exception, when a DRU is applied to a 20 MHz channel among the corresponding non-punctured 40 MHz channel and 20 MHz channel, a DRU distributed within the corresponding 20 MHz channel may be applied. This may correspond to a case in which, in the above-described PPDU transmission situation having a bandwidth of 80 MHz, 160 MHz, and/or 320 MHz, only a DRU having tones distributed over an entire 40 MHz is applied. In this regard, with respect to a DRU of a non-punctured 40 MHz channel, as described above, a DRU having tones distributed over the entire 40 MHz channel may be applied, or a DRU distributed up to a 20 MHz channel may be considered.

### Embodiment 4

This embodiment relates to a case in which, in a PPDU transmission situation having a bandwidth of 40 MHz, 80 MHz, 160 MHz, and/or 320 MHz, only DRU transmission or RRU transmission is performed/applied within a 20 MHz channel unit.

That is, within the corresponding 20 MHz channel, DRU and RRU may not be applied simultaneously. However, when tones of the DRU are distributed over an entire 40 MHz channel, 80 MHz channel, 160 MHz channel, and/or 320 MHz channel (i.e., when a distributed bandwidth (dBW) is 40 MHz, 80 MHz, 160 MHz, and/or 320 MHz), an RRU may not be allocated within the corresponding channel. In addition, when the tones of the DRU are distributed over the entire bandwidth, an RRU may not be allocated to the corresponding PPDU, and the corresponding PPDU may not be referred to as a PPDU of a hybrid mode.

In a PPDU transmission situation of a hybrid mode according to the present embodiment, application of a small RU may be constrained to use a DRU, and an RRU may be applicable from a 242-tone RU. In this regard, a DRU of 242 tones or more may also be usable, or the DRU may be constrained to a small RU. Alternatively, when a 26-tone RU or a 52-tone RU is applied, use of a DRU may be constrained, and an RRU may be usable from a 106-tone RU. In this regard, a DRU of 106 tones or more may also be usable, or the DRU may be constrained up to a 52-tone RU. Alternatively, when a 26-tone RU is applied, use of a DRU may be constrained, and an RRU may be usable from a 52-tone RU. In this regard, a DRU of 52 tones or more may also be usable, or the DRU may be constrained to only a 26-tone RU.

In this case, within a 20 MHz channel to which a DRU is applied, only a DRU having tones distributed over an entire 20 MHz channel may be applied.

### Embodiment 5

The present embodiment relates to a method for operating a corresponding channel based on a distributed bandwidth (dBW), when a DRU is applied to a specific 80 MHz channel within a PPDU having a bandwidth of 80 MHz or more.

Specifically, when a DRU is applied to a specific 80 MHz channel in a PPDU having a bandwidth of 80 MHz or more, an operation method of the corresponding channel may be classified based on the following factors.
- Non-puncturing
- Preamble puncturing
- a hybrid mode PPDU

Hereinafter, specific channel operation methods based on the corresponding factors will be described.

### (Embodiment 5-1)

First, when a DRU is applied in an 80 MHz channel to which puncturing is not applied, various modes/types of distributed bandwidth (dBW) as follows may be considered.

For example, an 80 MHz distributed bandwidth mode may be considered. The corresponding mode may be efficient in terms of maximization of a power boosting gain and a data rate. As another example, a 20 MHz + 20 MHz + 40 MHz distributed bandwidth mode or a 40 MHz + 20 MHz + 20 MHz distributed bandwidth mode may be considered. The corresponding mode may be efficient for a STA performing 20 MHz operation and a STA performing 40 MHz operation. In this regard, only a case in which an order of 20 MHz/40 MHz is always fixed (i.e., one of two modes) may be considered, or both of the two modes may be considered. As another example, a 40 MHz + 40 MHz distributed bandwidth mode may be considered. The corresponding mode may be efficient when only a STA performing an operation of 40 MHz or more exists. As another example, a 20 MHz + 20 MHz + 20 MHz + 20 MHz distributed bandwidth mode may be considered. The corresponding mode may be efficient in a situation in which a plurality of 20 MHz operation STAs are transmitted/allocated.

When all four modes described above are considered, or when only three modes are considered, each mode may be indicated in a non-punctured 80 MHz channel to which a DRU is applied by using specific 2 bits. Alternatively, when only two modes are considered, each mode may be indicated in a non-punctured 80 MHz channel to which a DRU is applied by using specific 1 bit. Alternatively, when only one mode is considered, a separate mode indication may be unnecessary.

In terms of efficiency, only an 80 MHz distributed bandwidth mode and a 20 MHz + 20 MHz + 40 MHz distributed bandwidth mode may be considered, and in this case, the two modes may be indicated in a non-punctured 80 MHz channel to which a DRU is applied by using 1 bit.

In addition, when an order of 20 MHz/40 MHz is not fixed in a 20 MHz + 20 MHz + 40 MHz distributed bandwidth mode (i.e., when both a 20 MHz + 20 MHz + 40 MHz distributed bandwidth mode and a 40 MHz + 20 MHz + 20 MHz distributed bandwidth mode are considered), 3 bits, 2 bits, or 1 bit may be required for mode indication. That is, a total of five modes may be defined by considering the 20 MHz + 20 MHz + 40 MHz distributed bandwidth mode and the 40 MHz + 20 MHz + 20 MHz distributed bandwidth mode as different modes, and some modes may be excluded. Alternatively, a mode may be indicated by using 2 bits or 1 bit (in this case, the 20 MHz + 20 MHz + 40 MHz distributed bandwidth mode and the 40 MHz + 20 MHz + 20 MHz distributed bandwidth mode are classified as one mode in the corresponding indication), and when the 20 MHz + 20 MHz + 40 MHz distributed bandwidth mode is indicated, a method of indicating a position of 40 MHz by using an additional 1 bit may be applied. That is, the 20 MHz + 20 MHz + 40 MHz distributed bandwidth mode and the 40 MHz + 20 MHz + 20 MHz distributed bandwidth mode may be distinguished by using the additional 1 bit.

For example, when the above-described PPDU transmission is a trigger based (TB) PPDU transmission, for indication of the above-described mode, 1 bit, 2 bits, or 3 bits among bits located at a same position as a reserved subfield of a user information field of an existing version/variant (e.g., EHT) not supporting a DRU, trigger dependent user information, or some bits of an SS allocation subfield, in a user information field of a version/variant (e.g., UHR or beyond-UHR) supporting a DRU within a trigger frame, may be used. Additionally or alternatively, for indication of the above-described mode, 1 bit, 2 bits, or 3 bits among bits located at a same position as a reserved subfield of a common information field of an existing version/variant (e.g., EHT) not supporting a DRU, in a common information field of a version/variant (e.g., UHR or beyond-UHR) supporting a DRU within a trigger frame, may be used. Additionally or alternatively, for indication of the above-described mode, 1 bit, 2 bits, or 3 bits among bits located at a same position as a reserved subfield of an existing special user information field or bits located at a same position as a U-SIG disregard and validate subfield in a special user information field may be used.

As another example, when the above-described PPDU transmission is a downlink (DL) PPDU transmission, for indication of the above-described mode, 1 bit, 2 bits, or 3 bits among bits located at a same position as a reserved subfield of a user field in a SIG field (e.g., UHR-SIG, beyond-UHR-SIG) of a version/variant supporting a DRU, some bits of an NSS subfield, a bit of a beamformed subfield, or a bit of a coding subfield, corresponding to a user field in a SIG field (e.g., EHT-SIG) of an existing version/variant not supporting a DRU, may be used. Additionally or alternatively, for indication of the above-described mode, 1 bit, 2 bits, or 3 bits among bits located at a same position as disregard or validate subfields in a common field of a U-SIG or another SIG field (e.g., EHT-SIG) of an existing version/variant not supporting a DRU, in a common field of a U-SIG or another SIG field (e.g., UHR-SIG, beyond-UHR-SIG) of a version/variant supporting a DRU, may be used.

### (Embodiment 5-2)

Next, when a DRU is applied in an 80 MHz channel to which 20 MHz puncturing is applied, various modes/types of distributed bandwidth (dBW) as follows may be considered.

For example, a 60 MHz distributed bandwidth mode may be considered. The corresponding mode may be efficient in terms of maximization of a power boosting gain and a data rate. As another example, a 20 MHz + 40 MHz distributed bandwidth mode or a 40 MHz + 20 MHz distributed bandwidth mode may be considered. The corresponding mode may be efficient for a STA performing 20 MHz operation and a STA performing 40 MHz operation. In this regard, since whether the mode is the 20 MHz + 40 MHz distributed bandwidth mode or the 40 MHz + 20 MHz distributed bandwidth mode is determined according to a position of a punctured 20 MHz channel, an additional method for distinguishing therebetween may be unnecessary. As another example, a 20 MHz + 20 MHz + 20 MHz distributed bandwidth mode may be considered. The corresponding mode may be efficient in a situation in which a plurality of 20 MHz operation STAs are transmitted/allocated.

When all three modes described above are considered, each mode may be indicated in a 20 MHz-punctured 80 MHz channel to which a DRU is applied by using specific 2 bits. Alternatively, when only two modes are considered, each mode may be indicated in a 20 MHz-punctured 80 MHz channel to which a DRU is applied by using specific 1 bit. Alternatively, when only one mode is considered, a separate mode indication may be unnecessary. In terms of implementation and/or efficiency, only a 20 MHz + 40 MHz distributed bandwidth mode may be considered, and in this case, the above-described mode indication may be unnecessary. When an indication is required, the indication may be performed by using some of bits defined for mode indication in a non-punctured 80 MHz channel (e.g., bits described in Embodiment 5-1). When the corresponding bits are insufficient, the mode indication may be performed by using some of bits available in the above-described TB PPDU transmission or DL PPDU transmission described in Embodiment 5-1.

### (Embodiment 5-3)

Next, when a DRU is applied in an 80 MHz channel to which 40 MHz puncturing is applied, various modes/types of distributed bandwidth (dBW) as follows may be considered.

For example, a 40 MHz distributed bandwidth mode may be considered. The corresponding mode may be efficient in terms of maximization of a power boosting gain and a data rate. As another example, a 20 MHz + 20 MHz distributed bandwidth mode may be considered. The corresponding mode may be efficient in a situation in which a plurality of 20 MHz operation STAs are transmitted/allocated.

When both of the two modes described above are considered, each mode may be indicated in a 40 MHz-punctured 80 MHz channel to which a DRU is applied by using specific 1 bit. Alternatively, when only one mode is considered, a separate mode indication may be unnecessary. In terms of implementation, only a 40 MHz distributed bandwidth mode may be considered, and in this case, the above-described mode indication may be unnecessary. When an indication is required, the indication may be performed by using some of bits defined for mode indication in a non-punctured 80 MHz channel (e.g., bits described in Embodiment 5-1). When the corresponding bits are insufficient, the mode indication may be performed by using some of bits available in the above-described TB PPDU transmission or DL PPDU transmission described in Embodiment 5-1.

### (Embodiment 5-4)

In addition, with respect to a PPDU in which a DRU and an RRU are transmitted together/simultaneously, that is, a PPDU of a hybrid mode, application of distributed bandwidths of various modes and a mode indication method related thereto may be defined.

For example, in the case of a PPDU of a hybrid mode having a bandwidth of 80 MHz, 160 MHz, and/or 320 MHz, a method in which a DRU and an RRU are not used simultaneously within 80 MHz may be considered for implementation gain. In this case, in an 80 MHz channel to which a DRU is applied, distributed bandwidths of various modes proposed as described above may be applied, and a related mode indication method may be applied in the same or similar manner (e.g., see Embodiments 5-1 to 5-3).

As another example, in the case of a PPDU of a hybrid mode having a bandwidth of 80 MHz, a method in which a DRU and an RRU are not used simultaneously within 40 MHz may be considered for implementation gain. In this case, in a 40 MHz channel to which a DRU is applied, various modes/types of distributed bandwidth (dBW) as follows may be considered.

For example, a 40 MHz distributed bandwidth mode may be considered. The corresponding mode may be efficient in terms of maximization of a power boosting gain and a data rate. As another example, a 20 MHz + 20 MHz distributed bandwidth mode may be considered. The corresponding mode may be efficient in a situation in which a plurality of 20 MHz operation STAs are transmitted/allocated.

When both of the two modes described above are considered, each mode may be indicated in a 40 MHz channel to which a DRU is applied by using specific 1 bit. Alternatively, when only one mode is considered, a separate mode indication may be unnecessary. In terms of implementation, the 20 MHz + 20 MHz distributed bandwidth mode may not be suitable, and in this case, the above-described mode indication may be unnecessary. When an indication is required, the indication may be performed by using some of bits defined for mode indication in a non-punctured 80 MHz channel (e.g., bits described in Embodiment 5-1). When the corresponding bits are insufficient, the mode indication may be performed by using some of bits available in the above-described TB PPDU transmission or DL PPDU transmission described in Embodiment 5-1

In this regard, with respect to a PPDU of a hybrid mode having a bandwidth of 80 MHz, when 20 MHz puncturing is applied to a 40 MHz channel to which a DRU is applied, a 20 MHz distributed bandwidth may be applied to a non-punctured 20 MHz channel. In this case, an additional indication (e.g., a mode indication) may be unnecessary.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
receiving, from a second STA, a trigger frame including resource allocation information for transmission of a trigger based (TB) physical layer protocol data unit (PPDU) for a bandwidth greater than or equal to 80 MHz; and
transmitting, to the second STA, the TB PPDU in a distributed resource unit (DRU) or a resource unit (RU) based on the resource allocation information,
wherein, for the TB PPDU, DRU-based transmission or RU-based transmission is applied on an 80 MHz channel unit basis, and
wherein, based on the first STA being allocated within a specific 80 MHz channel to which the DRU-based transmission is applied, the first STA is allocated to at least one of a first type DRU having tones distributed over an 80 MHz channel, a second type DRU having tones distributed over a 40 MHz channel, or a third type DRU having tones distributed over a 20 MHz channel.

2. The method of claim 1,
wherein the specific 80 MHz channel is based on any one of:
a first type distribution channel configured such that one first type DRU is applicable,
a second type distribution channel configured such that one second type DRU and two third type DRUs are applicable,
a third type distribution channel configured such that two second type DRUs are applicable, or
a fourth type distribution channel configured such that four third type DRUs are applicable.

3. The method of claim 2,
wherein the specific 80 MHz channel is a non-punctured 80 MHz channel.

4. The method of claim 2,
wherein the trigger frame includes information indicating a type of a distribution channel for the specific 80 MHz channel.

5. The method of claim 1,
wherein, based on 20 MHz puncturing being applied to the specific 80 MHz channel,
the specific 80 MHz channel is based on any one of:
a fifth type distribution channel configured such that one second type DRU and one third type DRU are applicable, or
a sixth type distribution channel configured such that three third type DRUs are applicable.

6. The method of claim 5,
wherein the trigger frame includes information indicating a type of a distribution channel for the specific 80 MHz channel to which 20 MHz puncturing is applied.

7. The method of claim 1,
wherein, based on 40 MHz puncturing being applied to the specific 80 MHz channel,
the specific 80 MHz channel is based on any one of:
a seventh type distribution channel configured such that one second type DRU is applicable, or
an eighth type distribution channel configured such that two third type DRUs are applicable.

8. The method of claim 7,
wherein the trigger frame includes information indicating a type of a distribution channel for the specific 80 MHz channel to which 40 MHz puncturing is applied.

9. The method of claim 1,
wherein the TB PPDU is configured with a bandwidth including one or more channels to which a DRU tone plan or an RU tone plan is applicable.

10. The method of claim 1,
wherein based on that the bandwidth is 80 MHz and the DRU-based transmission is allocated to a specific 40 MHz channel included in the bandwidth,
the specific 40 MHz channel is based on any one of:
a ninth type distribution channel configured such that one second type DRU is applicable, or
a tenth type distribution channel configured such that two third type DRUs are applicable.

11. The method of claim 1,
wherein based on that the bandwidth is 80 MHz, the first STA is allocated within a specific 40 MHz channel to which the DRU-based transmission is applied and 20 MHz puncturing is applied to the specific 40 MHz channel, the first STA is allocated to a DRU having tones distributed over a non-punctured 20 MHz channel within the specific 40 MHz channel.

12. The method of claim 1,
wherein the DRU-based transmission corresponds to a transmission using a DRU composed of non-contiguous tones, and
wherein the RU-based transmission corresponds to a transmission using an RU composed of contiguous tones.

13. A first station (STA) device in a wireless local area network (WLAN) system, the device comprising:
at least one transceiver; and
at least one processor connected to the at least one transceiver,
wherein the at least one processor is configured to:
receive, from a second STA, a trigger frame including resource allocation information for transmission of a trigger based (TB) physical layer protocol data unit (PPDU) for a bandwidth greater than or equal to 80 MHz; and
transmit, to the second STA, the TB PPDU in a distributed resource unit (DRU) or a resource unit (RU) based on the resource allocation information,
wherein, for the TB PPDU, DRU-based transmission or RU-based transmission is applied on an 80 MHz channel unit basis, and
wherein, based on the first STA being allocated within a specific 80 MHz channel to which the DRU-based transmission is applied, the first STA is allocated to at least one of a first type DRU having tones distributed over an 80 MHz channel, a second type DRU having tones distributed over a 40 MHz channel, or a third type DRU having tones distributed over a 20 MHz channel.

14. A method performed by a second station (STA) in a wireless local area network (WLAN) system, the method comprising:
transmitting, to a first STA, a trigger frame including resource allocation information for transmission of a trigger based (TB) physical layer protocol data unit (PPDU) for a bandwidth greater than or equal to 80 MHz; and
receiving, from the first STA, the TB PPDU in a distributed resource unit (DRU) or a resource unit (RU) based on the resource allocation information,
wherein, for the TB PPDU, DRU-based transmission or RU-based transmission is applied on an 80 MHz channel unit basis, and
wherein, based on the first STA being allocated within a specific 80 MHz channel to which the DRU-based transmission is applied, the first STA is allocated to at least one of a first type DRU having tones distributed over an 80 MHz channel, a second type DRU having tones distributed over a 40 MHz channel, or a third type DRU having tones distributed over a 20 MHz channel.

15. A second station (STA) device in a wireless local area network (WLAN) system, the device comprising:
at least one transceiver; and
at least one processor connected to the at least one transceiver,
wherein the at least one processor is configured to:
transmit, to a first STA, a trigger frame including resource allocation information for transmission of a trigger based (TB) physical layer protocol data unit (PPDU) for a bandwidth greater than or equal to 80 MHz; and
receive, from the first STA, the TB PPDU in a distributed resource unit (DRU) or a resource unit (RU) based on the resource allocation information,
wherein, for the TB PPDU, DRU-based transmission or RU-based transmission is applied on an 80 MHz channel unit basis, and
wherein, based on the first STA being allocated within a specific 80 MHz channel to which the DRU-based transmission is applied, the first STA is allocated to at least one of a first type DRU having tones distributed over an 80 MHz channel, a second type DRU having tones distributed over a 40 MHz channel, or a third type DRU having tones distributed over a 20 MHz channel.

16. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to any one of Claim 1 to Claim 12.

17. At least one non-transitory computer-readable medium storing at least one instruction, wherein:
the at least one instruction controls a device to perform a method according to any one of Claim 1 to Claim 12 in a wireless local area network (WLAN) system by being executed by at least one processor.
